# EUROPÄISCHE PATENTSCHRIFT

(11) **EP 4 015 085 B1**
(45) Veröffentlichungstag und Bekanntmachung des Hinweises auf die Patenterteilung: **02.07.2025**
(21) Anmeldenummer: 20215398.7
(22) Anmeldetag: 18.12.2020
(51) Int. Cl.: B02C 4/10, B02C 4/02, B29B 17/04, B02C 4/28, B29K 105/08, B29L 7/00

(54) **VORRICHTUNG ZUM ZERKLEINERN VON FLÄCHENKÖRPERN AUS FASERVERBUNDWERKSTOFF**
DEVICE FOR GRINDING SURFACE BODIES MADE FROM FIBRE COMPOSITE MATERIAL
DISPOSITIF DE CONCASSAGE DES CORPS PLATS EN FIBRE COMPOSITE

(43) Veröffentlichungstag der Anmeldung: 22.06.2022
(73) Patentinhaber: Weißenborn Maschinenbau GmbH, 37574 Einbeck (DE); Kruk, Robert, 37235 Hessisch-Lichtenau (DE)
(72) Erfinder: KRUK, Robert, 37235 Hessisch-Lichtenau (DE)
(74) Vertreter: Walther Bayer Faber Patentanwälte PartGmbB

(56) Entgegenhaltungen:
- WO-A1-2006/133870
- DE-U1- 8 910 075
- JP-A- 2007 054 760
- US-B1- 6 199 778

## Beschreibung

Die Erfindung betrifft eine Vorrichtung zum Zerkleinern von Flächenkörpern aus Faserverbundwerkstoff, mit einer rotierend angetriebenen Brechwalze, mit der die Flächenkörper in Kontakt bringbar sind und die dazu ausgebildet ist, die Flächenkörper in Kontakt mit der Außenumfangsfläche der Brechwalze zu zerbrechen, und wobei eine Zufuhreinrichtung mit einem Zufuhrelement vorgesehen ist, an dem eine Zufuhrfläche ausgebildet und dazu eingerichtet ist, die Flächenkörper an der Zufuhrfläche entlang bewegend an die Brechwalze heranzuführen, um mit der Außenumfangsfläche der Brechwalze in Wechselwirkung zu gelangen, wobei die Zufuhrfläche in der Umfangsposition der Zufuhr unter einem Winkel zu einer Tangentialen der Außenumfangsfläche geneigt oder senkrecht zur Tangentialen eingerichtet ist.

### STAND DER TECHNIK

Im Rahmen des Recyclings von Faserverbundwerkstoffen stellt sich die Aufgabe, Bauteile aus Faserverbundwerkstoff zu zerkleinern, um das so gebildete Ausgabeprodukt entweder weiter aufzutrennen oder um dieses einer neuen Verwendung zuzuführen. Faserverbundwerkstoffe bilden häufig Flächenkörper, beispielsweise für Rotoren von Windenergieanlagen, Bootsrümpfe, Sportgeräte, Maschinengehäuse, Gartenteicheinsätze, Kälbchenställe und dergleichen. Um solche Bauteile nach Gebrauchsende für das Recycling zu zerkleinern, werden diese zunächst in geeignete transportfähige Längen zersägt oder zerschnitten, um Flächenkörper mit einer Größe zu schaffen, die einer entsprechenden Vorrichtung zum Zerkleinern der Flächenkörper zugeführt werden können, beispielsweise mit Quermaßen von 0,5 m bis 3 m oder mit Hauptabmessungen von beispielsweise 0,5 m bis 5 m.

Die Schwierigkeit beim Zerkleinern von Flächenkörpern aus Faserverbundwerkstoff entsteht in der Regel dadurch, dass der Faseranteil, also beispielsweise Glasfaser oder Kohlefaser, eine abrasive Wirkung auf die Schneidwerkzeuge einer solchen Vorrichtung zum Zerkleinern von Flächenkörpern aufweist. Oft sind die Standzeiten von Schneidmessern, der aktiven Werkzeugteile eines Schredders, einer Stanzeinrichtung für den Scherschnitt und dergleichen sehr kurz. Zudem ist der Energiebedarf zum Betrieb solcher Vorrichtungen sehr groß, da Flächenkörper aus Faserverbundwerkstoff in der Regel eine hohe Festigkeit aufweisen, sodass die Zerkleinerung derartiger Flächenkörper in der Regel hohe Kräfte erfordert.

Beispielsweise beschreibt die EP 0 443 051 A1 das mechanische Aufbrechen einer Glasfaser-Polyester-Verbundstruktur mittels eines Schlagwerkes.

Die WO 93/05883 A1 beschreibt die Zerkleinerung von Faserverbundwerkstoffen mittels einer Hammermühle, und anschließend erfolgt eine weitere Trennung der Fasern vom Matrixmaterial beispielsweise mittels eines Siebes und mittels eines Luftstroms.

In der JP 2003 071 839 A wird beschrieben, dass Faserverbundwerkstoffe zunächst geschreddert und anschließend mit einer Siebmühle gemahlen werden, und die enthaltenen Fasern und das Matrixmaterial werden mittels eines Luftstromes aufgetrennt. In einer Siebmühle wird das Material üblicherweise fein gerieben und durch ein Sieb gedrückt, wodurch eher pulverförmige Zwischenprodukte erzeugt werden, die für eine Weiterverwendung etwa als festigkeitssteigernder Füllstoff für Werkstoffe der Bauindustrie von nur geringerem Wert sind.

Weitere Vorrichtungen zum Zerkleinern von Flächenkörpern aus Faserverbundwerkstoffen bedienen sich der Anordnung von Walzen mit einer Verzahnung auf der Umfangsfläche, wie aus der EP 1 454 673 B1 bekannt. Dabei ergibt sich ein großer Verschleiß der Zähne auf dem Umfang der Walzen, und es kann das Problem auftreten, dass Flächenkörper aus Faserverbundwerkstoff zwischen die scheibenförmigen Walzen gezogen werden, und die Walzen können darauffolgend gegeneinander verklemmen. Dadurch ergeben sich häufige Stillstände der Vorrichtung und die Standzeiten der Walzen sind nachteilhaft stark begrenzt.

Weiterhin ist der Einsatz von Querstromzerspanern zum Zerkleinern von Faserverbundwerkstoffen bekannt, wie beispielsweise in der DE 20 2015 104 540 U1 beschrieben. Derartige Querstromzerspaner, die in der Regel auf dem Prinzip einer rotierenden Kette beruhen und die Flächenkörper in einem geschlossenen Raum zerschlagen, sind in ihrem Betrieb sehr energieintensiv und die Beschaffenheit und die Größe der Ausgabeprodukte aus den zerkleinerten Flächenkörpern aus Faserverbundwerkstoff ist nicht wahlweise einstellbar bzw. diese können nicht etwa in einer gebildeten Zwischengröße wahlweise entnommen werden.

Aus der EP 0 547 494 A1 ist ein Verfahren zum Zerkleinern von bahnförmigem Material mittels rotierender Walzen bekannt, indem das bahnförmige Material zwischen die Walzen mit ineinander greifendem Zahnprofil eingezogen und zerkleinert wird.

Die JP 2012-091 134 A offenbart eine Vorrichtung zum Zerkleinern von Flächenkörpern aus dem Bereich der Werkstoffe der Elektrotechnik, insbesondere Silizium, mit gegenläufig rotierend angetriebenen Brechwalzen, zwischen denen ein Brechspalt ausgebildet ist und in den die Flächenkörper eingegeben werden, wodurch die Flächenkörper in Kontakt mit den Außenumfangsflächen der Brechwalzen in voneinander unabhängige Einzelbruchstücke zerbrechen. Die vollständige Trennung der Bruchstücke voneinander gelingt zwischen zwei gegenläufig rotierend angetriebenen Brechwalzen allerdings nicht hinreichend, wenn der Faseranteil in einem Faserverbundwerkstoff die Bruchstücke noch zusammenhält, sodass ein nachfolgernder Prozess oder wenigstens eine zweite Stufe von zwei gegenläufig rotierend angetriebenen Brechwalzen notwendig ist.

Die DE 89 10 075 U1 offenbart eine Vorrichtung zum Zerkleinern von Flächenkörpern aus Faserverbundwerkstoff, mit einer rotierend angetriebenen Brechwalze, mit der die Flächenkörper in Kontakt bringbar sind und die dazu ausgebildet ist, die Flächenkörper in Kontakt mit der Außenumfangsfläche der Brechwalze zu zerbrechen, und wobei eine Zufuhreinrichtung mit einem Zufuhrelement vorgesehen ist, an dem eine Zufuhrfläche ausgebildet und dazu eingerichtet ist, die Flächenkörper an der Zufuhrfläche entlang bewegend an die Brechwalze heranzuführen, um mit der Außenumfangsfläche der Brechwalze in Wechselwirkung zu gelangen, wobei die Zufuhrfläche in der Umfangsposition der Zufuhr unter einem Winkel zu einer Tangentialen der Außenumfangsfläche geneigt oder senkrecht zur Tangentialen eingerichtet ist.

Nachteilhafterweise können aus einem Zerbrechen resultierende Bruchstücke aus Faserverbundwerkstoff über den Faseranteil noch aneinander hängen und miteinander verbunden bleiben, was die weitere Handhabung der Bruchstücke erschwert. Wünschenswert ist eine lose Schüttung, die aus voneinander unabhängigen Bruchbestandteilen besteht.

Ziel ist bei der Zerkleinerung von großflächigen Faserverbundwerkstoffen, beispielsweise von ausgedienten Rotoren von Windenergieanlagen, dass das zerkleinerte Material in nicht mehr zusammenhängenden Bruchstücken bereitgestellt werden kann, ohne dass ein nachfolgender Prozess notwendig wird. Die Bruchstücke sollten dabei in der Größe von einigen Millimetern oder Zentimetern vorliegen, um einer Weiterverwendung zugeführt zu werden. Herkömmliche Prozesse bedienen sich auf an sich bekannte Weise auf die Faserverbundwerkstoffe einwirkender Schneidelemente, die durch den Kontakt mit dem Faseranteil, insbesondere Glasfaser oder Kohlefaser, in kurzer Zeit verschleißen. Alternativ wird ein Brechprinzip zwischen zwei Walzen angewandt, das aber eine vollständige Trennung der Bruchstücke, die nicht mehr über ihren Faseranteil aneinander hängen, nicht in einem einzigen, geschlossenen Prozess ermöglichen und es sind Folgeprozesse mit separaten Prozessaufbauten notwendig.

### OFFENBARUNG DER ERFINDUNG

Die Aufgabe der Erfindung ist die Weiterbildung einer Vorrichtung zum Zerkleinern von Flächenkörpern aus Faserverbundwerkstoff und die Schaffung eines entsprechenden Verfahrens zum Betrieb einer solchen Vorrichtung, wobei die Vorrichtung eine möglichst große Standzeit der aktiven Werkzeuge aufweisen soll und das Bruchergebnis sollte möglichst aus vereinzelten Bruchstücken bestehen. Zudem ist es wünschenswert, dass die Vorrichtung mit einem niedrigen Energieaufwand betrieben werden kann. Darüber hinaus soll die Vorrichtung so beschaffen sein, dass die Form, Größe und Eigenschaft des Ausgangsproduktes aus den zerkleinerten Flächenkörpern aus Faserverbundwerkstoff auswählbar ist, insbesondere um die Ausgabeprodukte einer weiteren Verwendung zuzuführen.

Diese Aufgabe wird ausgehend von einer Vorrichtung gemäß dem Oberbegriff des Anspruches 1 und ausgehend von einem Verfahren gemäß Anspruch 13 mit den jeweils kennzeichnenden Merkmalen gelöst.

Vorteilhafte Weiterbildungen der Erfindung sind in den abhängigen Ansprüchen angegeben.

Erfindungsgemäß ist eine Gegenwalze eingerichtet ist, die unter Bildung eines Zwischenspaltes benachbart und/oder parallel zur Brechwalze angeordnet ist.

Die erfindungsgemäße Vorrichtung ermöglicht damit ein Zerkleinern von Flächenkörpern aus Faserverbundwerkstoff durch einen Vorgang, der einem Abraspeln des Flächenkörpers ähnelt, und an der Vorderkante des Flächenkörpers werden Brechvorgänge eingeleitet, die auf Verspannungen zwischen der Außenumfangsfläche der Brechwalze und der Zufuhrfläche der Zufuhreinrichtung beruhen. Die Zufuhrfläche ist vorzugsweise, jedoch nicht einschränkend, als Planfläche ausgeführt und bildet eine Art Rutsche, über die die Flächenkörper an die Brechwalze herangeführt werden.

Die Gegenwalze kann beispielsweise baugleich zur Brechwalze und mit einer identischen oder ähnlichen Außenumfangsfläche mit Brechelementen wie auch die Brechwalze ausgestaltet sein. So entsteht ein Brechwalzenpaar, wobei die Gegenwalze wahlweise auch angetrieben sein kann. Dabei wird aber der Flächenkörper in seinem einteiligen Verbund nicht in den Zwischenspalt zwischen der Brechwalze und der Gegenwalze eingegeben, sondern dieser wird wie oben beschrieben in einer ersten Umfangsposition zuvor gebrochen.

Der Antrieb der Gegenwalze kann insbesondere über Verbindungs- und Übertragungsmittel gemeinsam ausgeführt sein mit dem Antrieb der Brechwalze. Durch das damit gebildete Walzenpaar können die aus dem Flächenkörper herausgebrochenen Bruchstücke schließlich entweder noch zerkleinert werden oder die Bruchstücke werden auseinandergezogen, sofern diese noch über ihren Faseranteil aneinander hängen. Das Ergebnis des Prozesses ist eine Schüttung aus zerbrochenem Faserverbundwerkstoff der Flächenkörper, und die einzelnen Bruchstücke hängen nicht mehr zusammen. Der erreichte Vorteil liegt insbesondere darin, dass mit der Brechwalze sowohl das Brechen des Flächenkörpers über die Zufuhreinrichtung mit dem Zufuhrelement erfolgt, und in einem nachgelagerten Winkelsegment auf der Brechwalze erfolgt das weitere Zerkleinern und Vereinzeln der Bruchstücke mittels der Gegenwalze.

Die Zufuhrfläche ist an einem Zufuhrelement ausgebildet, und das Zufuhrelement ist ein zentraler Bestandteil der Zufuhreinrichtung. Der Flächenkörper ist vorzugsweise, jedoch nicht in einschränkender Weise, als Plankörper ausgebildet, und kann insofern auch an der Zufuhrfläche des Zuführelementes plan anliegen. Wird der Flächenkörper mit der Vorderkante voran in Richtung zur Brechwalze vorangetrieben, so kann mit einer entsprechenden Ausstattung der Außenumfangsfläche der Brechwalze der Raspelvorgang eingeleitet werden, wobei die Tangente an der Außenumfangsfläche an der Position, an der der Flächenkörper an die Außenumfangsfläche zugeführt wird, einen Winkel zur Erstreckung des Flächenkörpers einschließt, der größer ist als 20°, bevorzugt größer als 50°, bevorzugt größer als 60°, und besonders bevorzugt größer als 70° ist. Insofern wird der Flächenkörper vorzugsweise etwa senkrecht auf die Außenumfangsfläche der Brechwalze geführt, und ein Wegbrechen von Bestandteilen des Flächenkörpers durch den Raspelprozess erfolgt etwa senkrecht zur Erstreckungsebene des Flächenkörpers. Eine leicht schleppende Zufuhr gegen die Brechwalze sollte dabei aber einer stechenden Zufuhr vorgezogen werden.

Mit der erfindungsgemäß weitergebildeten Vorrichtung zum Zerkleinern von Flächenkörpern aus Faserverbundwerkstoff wird der Vorteil erreicht, dass die Flächenkörper nicht mehr zwischen zwei Brechwalzen und damit tangential zu deren Außenumfangsflächen herangeführt wird, da sich bei einer tangentialen Zuführung häufig das Problem ergibt, dass bei reinen Brechprozessen der Faserbestandteil des Faserverbundwerkstoffes nicht vollständig durchtrennt wird und damit die einzelnen Bruchstücke noch zusammen gehalten bleiben. Dieses Problem wird signifikant reduziert, indem die Bewegungsrichtung des Flächenkörpers auf den Tangentialpunkt zu erfolgt, indem der Flächenkörper etwa senkrecht auf die Außenumfangsfläche der Brechwalze zu geführt wird.

Eine vorteilhafte Ausgestaltung der erfindungsgemäßen Vorrichtung weist eine Brechwalze mit auf ihrer Außenumfangsfläche hervorstehenden Brechelementen auf. Die Brechelemente können bei Kontakt mit einer Vorderkante der zugeführten Flächenkörper einen Bruch der Flächenkörper im Bereich der Vorderkante erzeugen. Die Brechelemente weisen keine Schneiden auf, die im Flächenkörper einen Schnittvorgang auslösen würden. Vielmehr sind die Brechelemente stumpf ausgebildete aus der Oberfläche der Brechwalze hervorstehende Elemente, die bei Eingriff in die Vorderkante des Flächenkörpers in selbigem einen Bruch erzeugen, der basierend auf einer Überschreitung einer maximalen Bruchspannung erfolgt. Insofern erfolgt kein Scherschnitt, sondern es werden lediglich Bruchstücke aus der Vorderkante des Flächenkörpers herausgelöst, die seitlich zur Erstreckungsebene des Zufuhrelementes und der Zufuhrfläche mit dem darauf anliegenden Flächenkörper abgebrochen werden. Durch die frei entstehenden Bruchflächen erfolgt insbesondere auch kein Scherschnitt, sodass die Brechelemente lediglich einen Brechvorgang im Flächenkörper erzeugen, und dadurch ein minimaler bis gar kein Verschleiß der Brechelemente als Vorteil genutzt werden kann.

Die Brechwalze wird in einer Rotationsrichtung in Drehbewegung versetzt, die so ausgerichtet ist, dass die Brechelemente bei Eingriff in die Vorderkante des Flächenkörpers den Flächenkörper auf das vordere, walzenseitige Ende der Zufuhrfläche des Zuführelementes drücken. Nur so wird ein erforderlicher Bruch in der Vorderkante des Flächenkörpers erzeugt, der auf einer erzeugten mechanischen Spannung zwischen den Brechelementen einerseits und der Zufuhrfläche des Zufuhrelementes der Zufuhreinrichtung andererseits beruht. Der Flächenkörper wird folglich zwischen Brechelement und Zufuhrfläche des Zufuhrelementes verspannt, bis schließlich der gewünschte Bruch im Flächenkörper entsteht.

Nach einer weiteren vorteilhaften Ausgestaltung der erfindungsgemäßen Vorrichtung ist ein Zufuhrantrieb vorgesehen, der zum Vortrieb der Flächenkörper gegen die Außenumfangsfläche der Brechwalze auf diese einwirkend ausgebildet und eingerichtet ist. Der Zufuhrantrieb kann mit einer Steuerung so betrieben werden, dass der Flächenkörper mit einer optimalen Vorschubgeschwindigkeit gegen die Brechwalze geführt wird. Aufgrund der entstehenden Brechkräfte, die von der Brechwalze auch in Erstreckungsrichtung in den Flächenkörper einwirken, ist eine Zwangszuführung des Flächenkörpers gegen die Brechwalze von Vorteil, die durch den Zufuhrantrieb gebildet wird. Mit diesem Vorteil kann mit der Steuereinrichtung der Zufuhrantrieb so angesteuert werden, dass der Flächenkörper mit einer optimalen Geschwindigkeit gegen die Brechwalze geführt wird, sodass das gewünschte Brechergebnis entsteht.

Vorzugsweise ist der Zufuhrantrieb mit einem Antriebsmotor ausgebildet, der unabhängig betrieben werden kann vom Antriebsmotor der Brechwalze. Mit Vorteil weist der Zufuhrantrieb zum Kontakt mit dem Flächenkörper eine Förderwalze auf, und die Förderwalze wird mit dem Antriebsmotor angetrieben. Insbesondere kann auch ein Förderwalzenpaar vorgesehen sein, wobei eine Förderwalze des Förderwalzenpaares integriert im Zufuhrelement angeordnet sein kann, und ein Abschnitt der Förderwalze ragt beispielsweise aus der Zufuhrfläche der Zufuhreinrichtung hervor. Auch ist es denkbar, dass die Zufuhrwalze eine strukturierte Oberfläche derart aufweist, sodass diese mit einer Anpresskraft gegen den Flächenkörper eine Bewegung des Flächenkörpers in seiner Erstreckungsrichtung erzeugen kann, insbesondere gegen die Außenumfangsfläche der Brechwalze. Besonders vorteilhaft ist es insofern, dass die Förderwalze unter Bildung eines Förderspaltes beabstandet über der Zufuhrfläche angeordnet ist, sodass die zu zerkleinernden Flächenkörper in den Spalt eingegeben werden können.

Die Förderwalze rotiert dabei mit einer Außenumfangsgeschwindigkeit, die der Sollgeschwindigkeit des Flächenkörpers gegen die Brechwalze entsprechen soll. Die Förderwalze kann zur Mitnahme des Flächenkörpers gegen diesen beispielsweise mit einer Federanordnung vorgespannt werden, und durch den Antrieb der Förderwalze rotiert diese kontinuierlich und kann den Flächenkörper durch eine entsprechende Oberflächenstrukturierung insofern mitnehmen. Folglich rutscht der Flächenkörper an der Zufuhrfläche des Zufuhrelementes der Zufuhreinrichtung entlang gegen die Brechwalze. Um die Reibung beim Rutschen zu minimieren, kann eine beispielsweise nicht angetriebene Förderwalze gegenüberliegend zur ersten, angetriebenen Förderwalze in die Zufuhrfläche zu integriert werden, sodass ein Förderwalzenpaar entsteht, sodass die reibungsärmere Bewegung des Flächenkörpers gegen die Außenumfangsfläche der Brechwalze erzeugt werden kann.

Insbesondere ist die Zufuhreinrichtung unter Bildung eines Brechspaltes zwischen einem walzenseitigen Ende der Zufuhrfläche und der Außenumfangsfläche der Brechwalze an einer ersten Umfangsposition an die Außenumfangsfläche herangeführt. Weiterhin ist vorgesehen, dass die Gegenwalze unter Bildung des Zwischenspaltes an einer der ersten Umfangsposition in Rotationsrichtung der Brechwalze nachgelagerten zweiten Umfangsposition angeordnet ist. Der Winkel zwischen der ersten Umfangsposition und der zweiten Umfangsposition beträgt beispielsweise zwischen 20° bis 135°. Dabei kann der Winkel abgegriffen werden zwischen der Ebene der Zufuhrfläche der Zufuhreinrichtung und der Verbindungsgeraden zwischen der Achse der Brechwalze und der Achse der Gegenwalze. Die Achse der Brechwalze und die Achse der Gegenwalze sind dabei insbesondere parallel zueinander verlaufend ausgebildet, und zwischen der Brechwalze und der Gegenwalze bildet sich ein Zwischenspalt, der klein genug ausgebildet ist, um die Bruchstücke aus dem Flächenkörper weiter zu zerbrechen und diese auseinanderzuziehen.

Das Auslösen der Bruchstücke aus dem Flächenkörper erfolgt insbesondere dadurch, dass die Umfangsgeschwindigkeit der angetriebenen Förderwalze der Zufuhreinrichtung kleiner ist als die Umfangsgeschwindigkeit der Brechwalze. Damit ist auch die Zustellgeschwindigkeit des Flächenkörpers gegen die Brechwalze kleiner als die Geschwindigkeit, mit der die noch zusammenhängenden Bruchstücke in den Zwischenspalt gezogen werden. Dadurch, dass die Bruchstücke mit den Brechelementen auf der Außenumfangsfläche der Brechwalze mitgerissen werden, erfolgt bereits nicht nur ein Umknicken des Flächenkörpers unter Bildung von Bruchstücken, sondern die Bruchstücke werden aus dem Verbund des Flächenkörpers durch das nachfolgende Walzenpaar gezogen und damit endgültig gelöst. Um ein weiteres Vereinzeln der Bruchstücke zu erreichen, sind das Walzenpaar aus Brechwalze und Gegenwalze vorhanden, zwischen denen der Zwischenspalt gebildet wird, in welchem die Bruchstücke schneller eingezogen werden als die Zufuhrgeschwindigkeit des Flächenkörpers in den Brechspalt hinein, der gebildet ist zwischen einem walzenseitigen Ende des Zufuhrelementes und der Außenumfangsfläche der Brechwalze. Schließlich wird dadurch eine Vereinzelung der Bruchstücke erzeugt, wobei diese durch ein Hindurchtreten durch den Zwischenspalt weiter verkleinert werden können.

Die Förderwalze des Zufuhrantriebs kann zur Regulierung des Förderspaltes mittels einer mechanischen oder hydraulischen Federspannvorrichtung gegen den Flächenkörper und damit gegen die Zufuhrfläche des Zufuhrelementes vorgespannt werden. Mittels der Federspanneinrichtung wird der Kontakt zwischen der Förderwalze und dem Flächenkörper kraftbeaufschlagt, sodass der Flächenkörper in Richtung zur Brechwalze vorgeschoben werden kann, indem die Förderwalze rotatorisch angetrieben wird und den Flächenkörper mitbewegt. Durch die Federspanneinrichtung können auch unterschiedliche Dicken des Flächenkörpers ausgeglichen werden, und dickere Flächenkörper bewirken ein Zurückdrücken der Förderwalze, sodass der Förderspalt aufweiten kann, und dünnere Flächenkörper bewirken ein Nachführen der Förderwalze in Richtung zum Zufuhrelement durch die Federspanneinrichtung.

Die auf der Außenumfangsfläche der Brechwalze hervorstehenden Brechelemente sind mit Vorteil in die Außenumfangsfläche eingesetzt und/oder stoffschlüssig mit der Brechwalze verbunden und/oder in diese eingeschraubt. In gleicher Weise können insbesondere gleich ausgebildete Brechelemente in der Außenumfangsfläche der Gegenwalze eingebracht sein. Die Brechelemente weisen insbesondere einen kopfseitigen Wirkabschnitt in Form einer Kugelkalotte, eines Kegels oder eines balligen Abschnittes auf.

Mit weiterem Vorteil ist die Gegenwalze mit einer Federspanneinrichtung in Richtung zur Brechwalze vorgespannt, und durch einen Anschlag kann der Zwischenspalt ein Mindestmaß aufweisen. Gelangen jedoch sehr große Bruchstücke aus dem Flächenkörper in den Zwischenspalt, kann die Gegenwalze unter Vergrößerung des Abstandes zur Brechwalze gewissermaßen auffedern, indem die Federspanneinrichtung eine entsprechende Nachgiebigkeit bildet.

Die Erfindung richtet sich weiterhin auf ein Verfahren zum Zerkleinern von Flächenkörpern aus einem Faserverbundwerkstoff mit einer Vorrichtung gemäß vorstehender Beschreibung, wobei das Verfahren wenigstens durch folgende Merkmale gekennzeichnet ist: Eingeben der Flächenkörper in die Vorrichtung, indem die Flächenkörper an der Zufuhrfläche der Zufuhreinrichtung anliegend in Richtung zur Brechwalze bewegt werden, wobei die Zufuhrfläche unter einem Winkel zu einer Tangentialen der Außenumfangsfläche geneigt oder senkrecht zur Tangentialen eingerichtet ist, und Ausbrechen von Bruchstücken aus einer Vorderkante des Flächenkörpers durch Kontakt der Vorderkante mit der Außenumfangsfläche der rotierenden Brechwalze, und es erfolgt das Anordnen einer Gegenwalze unter Bildung eines Zwischenspaltes benachbart und/oder parallel zur Brechwalze, sodass die aus dem Festverbund der Flächenkörper ausgelösten Bruchstücke in den Zwischenspalt zwischen der Brechwalze und der Gegenwalze eingebracht werden, sodass Faserbestandteile den Flächenkörper, die die Bruchstücke noch zusammenhalten, durchtrennt werden.

Das Verfahren ist weiterhin gekennzeichnet durch eine Gegenwalze, wobei die aus dem Festverbund des Flächenkörpers ausgelösten Bruchstücke in einen Zwischenspalt zwischen der Brechwalze und der Gegenwalze eingebracht werden, sodass Faserbestandteile der Flächenkörper, die die Bruchstücke noch zusammenhalten, durchtrennt werden können. Das Durchtrennen erfolgt insbesondere dadurch, dass die Brechwalze und die Gegenwalze mit einer Umfangsgeschwindigkeit in Rotation versetzt werden, die größer ist als die Zufuhrgeschwindigkeit des Flächenkörpers gegen die Brechwalze.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein schematisch dargestelltes Beispiel einer Vorrichtung
- Figur 2: ein detailliert dargestelltes Ausführungsbeispiel einer Vorrichtung gemäß der Erfindung in einer Seitendarstellung,
- Figur 3: eine perspektivische Ansicht der beispielshaft ausgebildeten Vorrichtung gemäß Figur 2,
- Figur 4: das Ausführungsbeispiel der Erfindung gemäß Figur 3 in einer Teilansicht ohne die Zufuhreinrichtung und
- Figur 5: eine perspektivische Darstellung der Brechwalze mit auf der Außenumfangsfläche angeordneten Brechelementen.

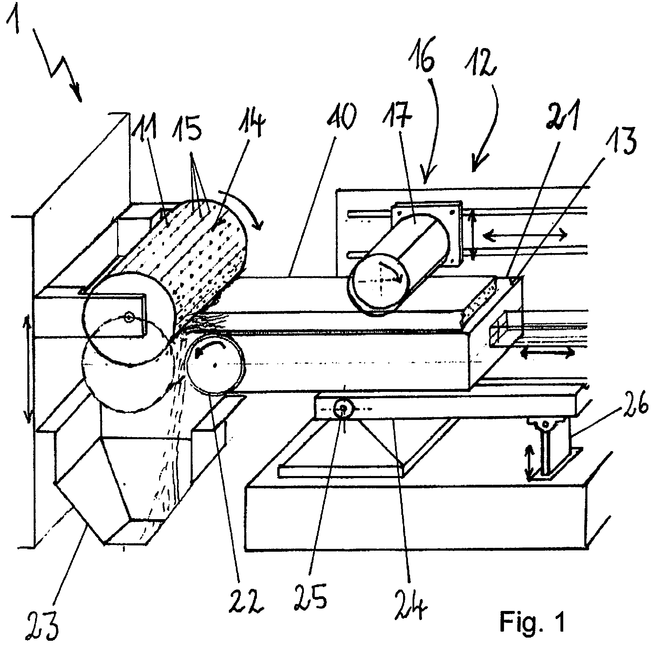

Fig. 1 stellt in schematischer Weise ein erstes, einfach und abstrahiert aufgebautes Beispiel einer Vorrichtung 1 dar. Die Vorrichtung 1 dient zum Zerkleinern von Flächenkörpern 10, die beispielsweise aus den Rotoren ausgedienter Windenergieanlagen bestehen können und einen Faserverbundwerkstoff wie GFK oder CFK aufweisen. Hierfür werden die großen Rotoren in so mittelgroße Stücke geschnitten, sodass die Flächenkörper 10 der Vorrichtung 1 zugeführt werden können.

Als Herzstück weist die Vorrichtung 1 eine Brechwalze 11 auf, die wie mit einem Pfeil angedeutet rotierend angetrieben wird. Die Brechwalze 11 weist eine Außenumfangsfläche 14 mit auf dieser aufgebrachten Brechelementen 15 auf, die nicht als Schneidelemente ausgebildet sind. Der zu zerkleinernde Flächenkörper 10 wird mittels einer Zufuhreinrichtung 12 linear angetrieben und an die Außenumfangsfläche 14 der rotierenden Brechwalze 11 herangeführt, um den Flächenkörper 10 im Bereich seiner Vorderkante, die in Kontakt mit der Brechwalze 11 gelangt, analog zu einem Raspelprozess zu zerbrechen.

Um den zu zerkleinernden Flächenkörper 10 gezielt an einer Umfangsposition an die Außenumfangsfläche 14 der Brechwalze 11 heranzuführen, weist die Zufuhreinrichtung 12 eine Zufuhrfläche 13 auf, die an einem beispielhaft plan dargestellten Zufuhrelement 21 ausgebildet ist. Die im Wesentlichen ebenfalls plan ausgebildeten und zu zerkleinernden Flächenkörper 10 können durch Plananlage an die Zufuhrfläche 13 an der definierten Umfangsposition an die Brechwalze 11 herangeführt werden, wobei das Ausführungsbeispiel ein Zufuhrelement 21 mit einer vorderseitigen Andruckrolle 22 darstellt, durch die das Ausbrechen von Bruchstücken aus dem Flächenkörper 10 noch begünstigt wird, da an der Andruckrolle 22 keine Reibung des Flächenkörpers 10 über der Zufuhrfläche 13 entsteht.

Die Rotationsrichtung der Brechwalze 11 ist so bestimmt, dass diese die Vorderkante des Flächenkörpers 10 gegen die Andruckrolle 22 des Zufuhrelementes 21 drückt, um auf definierte Weise Bruchstücke aus der Vorderkante des Flächenkörpers 10 auszubrechen. Diese fallen dann in ein Auffangmittel 23, das unterseitig der Brechwalze 11 angeordnet ist.

Um ein definiertes Zuführen des Flächenkörpers 10 gegen die Brechwalze 11 zu erreichen, dient eine Förderwalze 17 als Teil eines nicht weiter dargestellten Zufuhrantriebes 16, wobei die Förderwalze 17 in gezeigter Pfeilrichtung motorisch angetrieben ist. Die Förderwalze 17 wird gegen die Oberfläche des Flächenkörpers 10 gepresst, sodass der Flächenkörper 10 zwischen der Zufuhrfläche 13 und der Förderwalze 17 eingespannt wird. Durch den rotatorischen Antrieb der Förderwalze 17 wird der Flächenkörper 10 mit definiertem Vorschub schließlich gegen die Brechwalze 11 gefördert.

Das Zufuhrelement 21 ist beispielhaft auf einem Unterbau 24 angeordnet, und der Unterbau 24 kann um einen Drehpunkt 25 verschwenkt werden, beispielsweise indem eine Hubeinheit 26 einen hinteren Teil des Unterbaus 24 in der Höhe verstellt. Sodann kann sich auch die Neigung des Zufuhrelementes 21 verändern, sodass der Flächenkörper 10 in einem verstellbaren Winkel gegen die Brechwalze 11 geführt werden kann.

In der Darstellung ist mit Doppelpfeilen die Beweglichkeit weiterer Elemente dargestellt. Beispielsweise kann die Brechwalze 11 relativ zum Flächenkörper 10 in der Höhe verstellt werden, und die Förderwalze 17 ist sowohl in der Höhe verstellbar, insbesondere, um verschieden dicke Flächenkörper 10 auszugleichen, und die Förderwalze 17 kann auch in der Entfernung zur Brechwalze 11 verändert werden. Weiterhin kann die Anordnung des Zufuhrelementes 21 der Zufuhreinrichtung 12 in der Position verändert werden, insofern, als dass der Abstand zur Brechwalze 11 ebenfalls einstellbar ist.

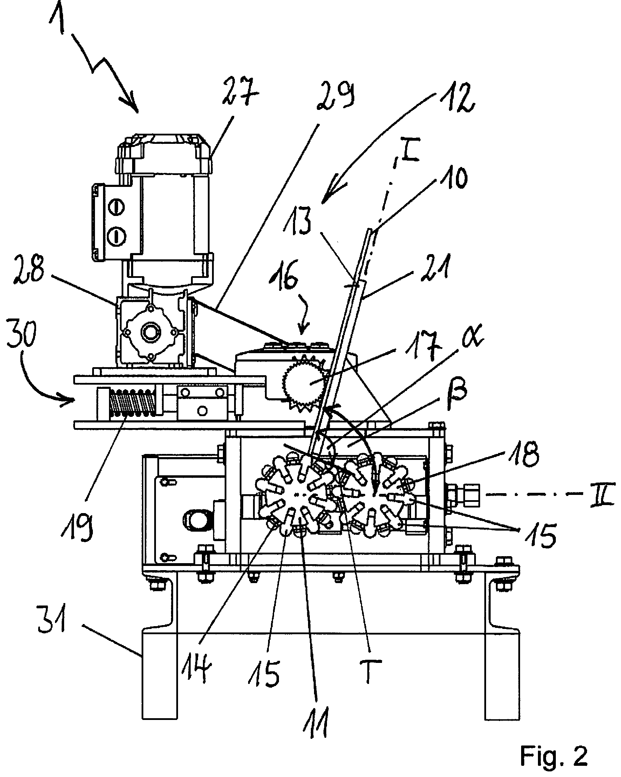

Fig. 2 zeigt ein weiteres etwas detaillierteres Ausführungsbeispiel der Vorrichtung 1 gemäß der Erfindung zur Zerkleinerung von Flächenkörpern 10, wobei ein Flächenkörper 10 beispielhaft der Vorrichtung 1 zugeführt ist. Dieser liegt plan an der Zufuhrfläche 13 des Zufuhrelementes 21 der Zufuhreinrichtung 12 an. Die Zufuhreinrichtung 12 umfasst einen Zufuhrantrieb 16 mit einem Antriebsmotor 27 und mit einer Getriebeeinheit 28, und um die Förderwalze 17 anzutreiben, dient ein Übertragungsmittel 29, beispielsweise ein Riemen oder eine Kette.

Die Förderwalze 17 ist mit einer Außenumfangsfläche ausgestattet, die so strukturiert ist, dass bei einer Rotation der Förderwalze 17 und unter Aufbringung einer Andruckkraft der Förderwalze 17 gegen den Flächenkörper 10 der Flächenkörper 10 in Richtung zur Brechwalze 11 bewegt werden kann. Um die Förderwalze 17 gegen den Flächenkörper 10 vorzuspannen, dient eine Spanneinrichtung 19, beispielsweise aufweisend zwei Schraubendruckfedern. Dabei kann die gesamte Zufuhreinrichtung 12 auf einem Schlitten 30 aufgenommen sein, sodass die Zufuhreinrichtung 12 relativ zu einem Grundgestell 31 der Vorrichtung 1 beweglich geführt ist.

Wird der Flächenkörper 10 gegen die Brechwalze 11 mit den auf der Außenumfangsfläche 14 aufgebrachten Brechelementen 15 bewegt, und ist die Brechwalze 11 in Rotation versetzt, so erfolgt ein Abraspeln der Vorderkante des Flächenkörpers 10 unter stetem Ausbruch von Bruchstücken aus der Vorderkante, mit der der Flächenkörper 10 gegen die Brechwalze 11 gefahren wird.

Das Zufuhrelement 21 und damit die Zufuhrfläche 13 und insofern auch der Flächenkörper 10 ist relativ zu einer Tangente T geneigt ausgebildet, die an der Außenumfangsfläche 14 der Brechwalze 11 in dem Punkt abgetragen ist, in dem der Flächenkörper 10 auf die Brechwalze 11 zugeführt wird, und die Neigung beträgt in dem gezeigten Ausführungsbeispiel etwas weniger als 90°. Damit wird der Flächenkörper 10 etwa senkrecht an die Außenumfangsfläche 14 der Brechwalze 11 herangeführt.

Benachbart zur Brechwalze 11 ist eine Gegenwalze 18 angeordnet, auf der ebenfalls auf der Außenumfangsfläche Brechelemente 15 angeordnet sind. Diese sind beispielhaft gleich ausgebildet zu den Brechelementen 15 der Brechwalze 11. Die Flächenelemente 21 werden an einer ersten Umfangsposition I der Brechwalze 11 zugeführt, wobei die Gegenwalze 18 an einer zweiten Umfangsposition II neben der Brechwalze 11 positioniert ist. Die zweite Umfangsposition II der Gegenwalze 18 ist mit Bezug auf die erste Umfangsposition I in der Rotationsrichtung der Brechwalze 11 nachfolgend auf die erste Umfangsposition I angeordnet.

Werden die Bruchstücke aus dem Flächenkörper 10 ausgelöst, gelangen diese in einen Zwischenspalt zwischen der Brechwalze 11 und der Gegenwalze 18, und für Bruchstücke, die über den Faseranteil des Faserverbundwerkstoffes noch aneinander hängen, können diese voneinander gelöst werden. Die Anordnung der Gegenwalze 18 relativ zur Anordnung des Flächenkörpers 10 zur Zuführung gegen die Brechwalze 11 erfolgt mit Bezug auf die Rotationsrichtung der Brechwalze 11 in einer nachfolgenden Position, wobei sich zwischen den beiden Umfangspositionen der Winkel β erstreckt, und dieser beträgt beispielsweise 50° bis 90°. So können die ausgelösten Bruchstücke des Flächenkörpers 10 in den Zwischenspalt zwischen der Brechwalze 11 und der Gegenwalze 18 gelangen, und die Bruchstücke können endgültig voneinander getrennt werden. Da diese vom restlichen Verbund des Faserverbundwerkstoffes der Flächenkörper abgerissen werden. Hierfür ist es vorteilhaft, die Zufuhrgeschwindigkeit des Flächenkörpers 10 geringer einzustellen als die Umfangsgeschwindigkeit der Außenumfangsfläche 14 der rotierenden Blechwalze 11. Erst dann kann ein effektives Auseinanderziehen der Bruchstücke voneinander erfolgen, sodass diese schließlich vollständig vereinzelt aus dem Zwischenspalt zwischen der Brechwalze 11 und der Gegenwalze 18 herausfallen, beispielsweise in ein nicht gezeigtes Behältnis innerhalb des Grundgestells 31 unterhalb von der Brechwalze 11 bzw. der Gegenwalze 18.

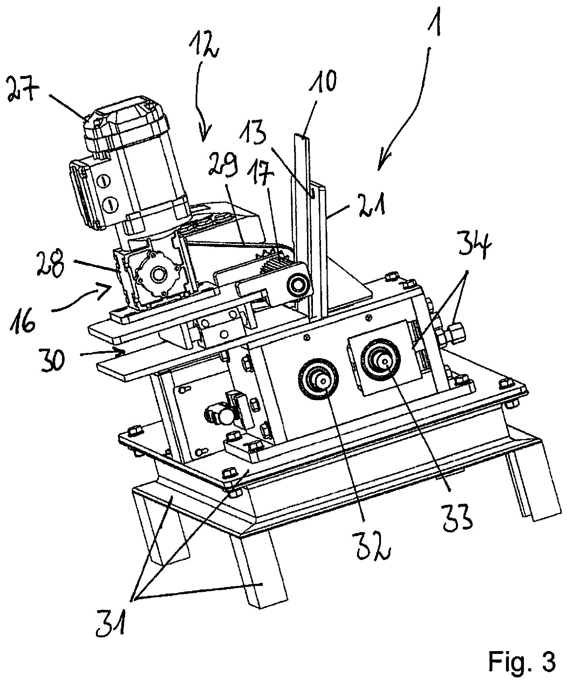

Fig. 3 zeigt eine perspektivische Ansicht des Ausführungsbeispiels der Vorrichtung 1 gemäß Fig. 2. Die Darstellung zeigt eine Walzenachse 32 der Brechwalze und eine Walzenachse 33 der Gegenwalze. Die Walzenachse 33 ist mit einer Federspannanordnung 34 in Richtung zur Walzenachse 32 vorgespannt, sodass der Zwischenspalt zwischen der Brechwalze und der Gegenwalze definiert eingestellt werden kann. Werden Flächenkörper 10 zugeführt, die Bruchstücke ergeben, die größer sind als der Zwischenspalt, kann die Federspannanordnung 34 so nachgeben, dass sich der Abstand der beiden Walzenachsen 32 und 33 vorübergehend vergrößert. Damit werden insbesondere Beschädigungen der Brechwalze und/oder der Gegenwalze und der darauf angebrachten Brechelemente vermieden.

Die Darstellung zeigt in wiederholter Weise zur Fig. 2 die Zufuhreinrichtung 12 mit dem Antriebsmotor 27, der Getriebeeinheit 28 und dem Übertragungsmittel 29, sowie mit dem Schlitten 30. Die Förderwalze 17 ist dabei in Kontakt mit dem Flächenkörper 10 gezeigt, der plan an der Zufuhrfläche 13 des Zufuhrelementes 21 anliegt. Unterseitig ist das Grundgestell 31 gezeigt, das beispielhaft aufgebaut ist aus Profilelementen, umfassend eine Grundplatte zur Aufnahme der weiteren Elemente der Vorrichtung 1.

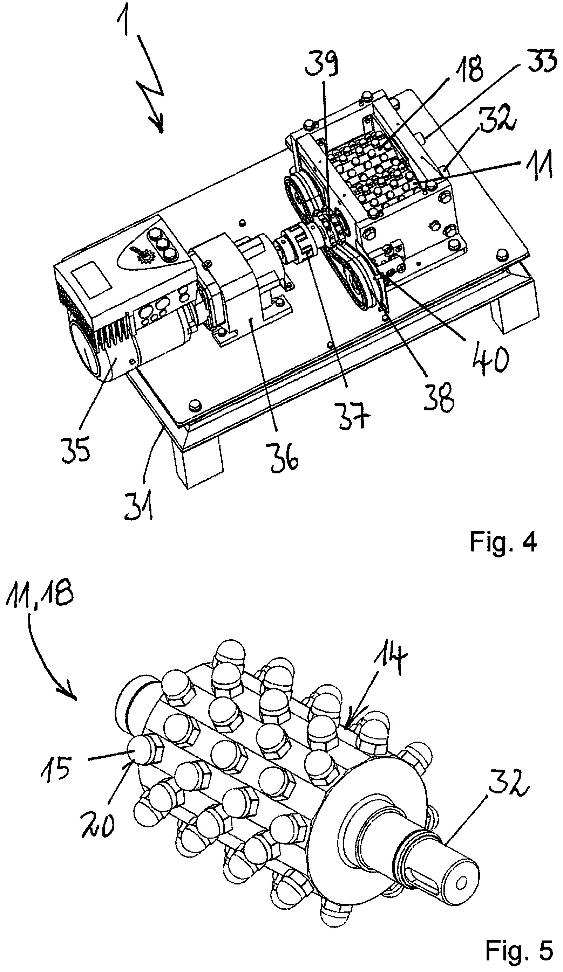

Fig. 4 zeigt eine reduzierte Ansicht des Ausführungsbeispiels der erfindungsgemäßen Vorrichtung 1 gemäß der Figuren 2 und 3 mit einem geöffneten Getriebekasten, in dem die Brechwalze 11 und die Gegenwalze 18 aufgenommen sind. Zum Antrieb der Walzen 11 und 18 dient ein Hauptantriebsmotor 35, der über ein Hauptgetriebe 36 und eine Kupplung 37 die Brechwalze 11 antreibt. Zum weiteren Antrieb der Gegenwalze 18 mittels des Hauptantriebsmotors 35 dient ein Übertragungsmittel 38, das beispielsweise in Gestalt eines Riemens oder einer Kette mit einem Antriebselement 39 auf der Walzenachse 32 der Brechwalze 11 angetrieben wird. Um eine definierte Spannung in das Übertragungsmittel 38 einzubringen, dient eine Spanneinrichtung 40, über die das Übertragungsmittel 38 ebenfalls geführt ist. Die Spanneinrichtung kann dabei auch kurzzeitige Abstandsänderungen der Walzenachsen 32 und 33 ausgleichen.

Durch die Führung des Übertragungsmittels 38 und die Wirkverbindung zum Antriebselement 39 wird erreicht, dass die Brechwalze 11 und die Gegenwalze 18 gegenläufig in Rotation versetzt werden, sodass die Bruchstücke aus dem Flächenkörper in den Zwischenspalt zwischen der Brechwalze 11 und der Gegenwalze 18 eingezogen werden können. Die Walzeneinheit mit der Brechwalze 11 und der Gegenwalze 18 sowie das Getriebe 36 mit dem Hauptantriebsmotor 35 sind gemeinsam auf dem Grundgestell 31 der Vorrichtung 1 aufgenommen.

Fig. 5 zeigt in einer perspektivischen Ansicht die Brechwalze 11, wobei die Gegenwalze 18 ebenfalls eine derartige Ausgestaltung aufweisen kann. Die Brechwalze 11 besitzt eine Außenumfangsfläche 14, auf der in regelmäßigen Abständen mehrere Brechelemente 15 angeordnet sind. Die Brechwalze 11 wird über die Walzenachse 32 in dem Walzengehäuse der Vorrichtung 1 aufgenommen. Die Brechelemente 15 weisen kopfseitig Kugelkalotten 20 auf, die in Kontakt mit der Vorderkante des Flächenkörpers 10 gelangen, und Bruchstücke aus der Vorderkante ausbrechen. Diese Brechelemente 15 werden in der vorstehend beschriebenen weiteren Umfangsposition in dem Zwischenspalt zur Gegenwalze 18 wieder auf die Bruchstücke einwirken. Die Brechelemente 15 weisen insofern keine Schneiden auf, und die Kugelkalotten 20 dienen lediglich zur Aufbringung von Brechkräften auf den Flächenkörper 10 und die daraus ausgebrochenen Bruchelemente. Das Ausführungsbeispiel zeigt in die Außenumfangsfläche 14 der Brechwalze 11 eingeschraubte Brechelemente 15, wofür diese einen Sechskantabschnitt aufweisen. Somit können verschlissene Brechelemente 15 auch auf einfache Weise aus der Außenumfangsfläche 14 ausgetauscht werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehende Merkmale und/oder Vorteile, einschließlich konstruktiver Einzelheiten und räumlicher Anordnungen, können sowohl für sich als auch in den verschiedensten Kombinationen erfindungswesentlich sein.

### Bezugszeichenliste:

- 1: Vorrichtung

- 10: Flächenkörper
- 11: Brechwalze
- 12: Zufuhreinrichtung
- 13: Zufuhrfläche
- 14: Außenumfangsfläche
- 15: Brechelement
- 16: Zufuhrantrieb
- 17: Förderwalze
- 18: Gegenwalze
- 19: Spanneinrichtung
- 20: Kugelkalotte
- 21: Zufuhrelement
- 22: Andruckrolle
- 23: Auffangmittel
- 24: Unterbau
- 25: Drehpunkt
- 26: Hubeinheit
- 27: Antriebsmotor
- 28: Getriebeeinheit
- 29: Übertragungsmittel
- 30: Schlitten
- 31: Grundgestell
- 32: Walzenachse
- 33: Walzenachse
- 34: Federspanneinrichtung
- 35: Hauptantriebsmotor
- 36: Hauptgetriebe
- 37: Kupplung
- 38: Übertragungsmittel
- 39: Antriebselement
- 40: Spanneinrichtung

- I: erste Umfangsposition
- II: zweite Umfangsposition
- T: Tangentiale
- α: Winkel
- β: Winkel

## Patentansprüche

1. Vorrichtung (1) zum Zerkleinern von Flächenkörpern (10) aus Faserverbundwerkstoff, mit einer rotierend angetriebenen Brechwalze (11), mit der die Flächenkörper (10) in Kontakt bringbar sind und die dazu ausgebildet ist, die Flächenkörper (10) in Kontakt mit der Außenumfangsfläche (14) der Brechwalze (11) zu zerbrechen, und wobei eine Zufuhreinrichtung (12) mit einem Zufuhrelement (21) vorgesehen ist, an dem eine Zufuhrfläche (13) ausgebildet und dazu eingerichtet ist, die Flächenkörper (10) an der Zufuhrfläche (13) entlang bewegend an die Brechwalze (11) heranzuführen, um mit der Außenumfangsfläche (14) der Brechwalze (11) in Wechselwirkung zu gelangen, wobei die Zufuhrfläche (13) in einer ersten Umfangsposition (I) der Zufuhr unter einem Winkel (α) zu einer Tangentialen (T) der Außenumfangsfläche (14) geneigt oder senkrecht zur Tangentialen (T) eingerichtet ist,
**dadurch gekennzeichnet,**
**dass** eine Gegenwalze (18) eingerichtet ist, die unter Bildung eines Zwischenspaltes benachbart und/oder parallel zur Brechwalze (11) angeordnet ist.

2. Vorrichtung (1) nach Anspruch 1,
**dadurch gekennzeichnet,**
**dass** die Brechwalze (11) auf ihrer Außenumfangsfläche (14) hervorstehende Brechelemente (15) aufweist, die bei Kontakt mit einer Vorderkante der zugeführten Flächenkörper (10) einen Bruch der Flächenkörper (10) im Bereich der Vorderkante erzeugen.

3. Vorrichtung (1) nach Anspruch 1 oder 2,
**dadurch gekennzeichnet,**
**dass** ein Zufuhrantrieb (16) vorgesehen ist, der zum Vortrieb der Flächenkörper (10) gegen die Außenumfangsfläche (14) der Brechwalze (11) auf diese einwirkend ausgebildet und eingerichtet ist.

4. Vorrichtung (1) nach Anspruch 3,
**dadurch gekennzeichnet,**
**dass** der Zufuhrantrieb (16) wenigstens eine angetriebene Förderwalze (17) aufweist, die in Kontakt mit den Flächenkörpern (10) bringbar ist.

5. Vorrichtung (1) nach Anspruch 4,
**dadurch gekennzeichnet,**
**dass** die Förderwalze (17) unter Bildung eines Förderspaltes beabstandet über der Zufuhrfläche (13) angeordnet ist, sodass die zu zerkleinernden Flächenkörper (10) in den Spalt eingebbar und in diesem zwischen der Zufuhrfläche (13) und der Förderwalze (17) verspannbar sind.

6. Vorrichtung (1) nach Anspruch 1,
**dadurch gekennzeichnet,**
**dass** die Zufuhreinrichtung (12) unter Bildung eines Brechspaltes zwischen einem walzenseitigen Ende der Zufuhrfläche (13) und der Außenumfangsfläche (14) der Brechwalze (11) an der ersten Umfangsposition (I) an die Außenumfangsfläche (14) herangeführt ist und dass die Gegenwalze (18) unter Bildung des Zwischenspaltes an einer der ersten Umfangsposition (I) in Rotationsrichtung der Brechwalze (11) nachgelagerten zweiten Umfangsposition (II) angeordnet ist.

7. Vorrichtung (1) nach Anspruch 6,
**dadurch gekennzeichnet,**
**dass** die erste Umfangsposition (I) und die zweite Umfangsposition (II) einen Winkel (β) von 20° bis 135° zueinander einschließen.

8. Vorrichtung (1) nach einem der vorgenannten Ansprüche,
**dadurch gekennzeichnet,**
**dass** der Winkel (α) zwischen der Zufuhrfläche (13) und der Tangentialen (T) der Außenumfangsfläche (14) der Brechwalze (11) verstellbar ist, indem die Neigung der Zufuhreinrichtung (12) relativ zur Tangentialen (T) veränderbar ist.

9. Vorrichtung (1) nach einem der Ansprüche 4 bis 8,
**dadurch gekennzeichnet,**
**dass** die Förderwalze (17) des Zufuhrantriebes (16) zur Regulierung des Förderspaltes mittels einer mechanischen oder hydraulischen Spanneinrichtung (19) gegen den Flächenkörper (10) vorspannbar ist.

10. Vorrichtung (1) nach einem der vorgenannten Ansprüche,
**dadurch gekennzeichnet,**
**dass** die auf der Außenumfangsfläche (14) der Brechwalze (11) hervorstehenden Brechelemente (15) in die Außenumfangsfläche (14) eingesetzt und/oder stoffschlüssig mit der Brechwalze (11) verbunden und/oder in diese eingeschraubt sind.

11. Vorrichtung (1) nach einem der vorgenannten Ansprüche,
**dadurch gekennzeichnet,**
**dass** die Brechelemente (15) einen kopfseitigen Wirkabschnitt in Form einer Kugelkalotte (20), eines Kegels oder eines balligen Abschnittes aufweisen.

12. Vorrichtung (1) nach einem der vorgenannten Ansprüche,
**dadurch gekennzeichnet,**
**dass** die Umfangsgeschwindigkeit der angetriebenen Förderwalze (17) kleiner ist als die Umfangsgeschwindigkeit der Brechwalze (11).

13. Verfahren zum Zerkleinern von Flächenkörpern (10) aus Faserverbundwerkstoff mit einer Vorrichtung (1) gemäß einem der Ansprüche 1 bis 12, wobei das Verfahren wenigstens die folgenden Merkmale umfasst:
- Eingeben der Flächenkörper (10) in die Vorrichtung (1), indem die Flächenkörper (10) an der Zufuhrfläche (13) der Zufuhreinrichtung (12) anliegend in Richtung zur Brechwalze (11) bewegt werden, wobei die Zufuhrfläche (13) unter einem Winkel (α) zu einer Tangentialen (T) der Außenumfangsfläche (14) geneigt oder senkrecht zur Tangentialen (T) eingerichtet ist,
- Ausbrechen von Bruchstücken aus einer Vorderkante des Flächenkörpers (10) durch Kontakt der Vorderkante mit der Außenumfangsfläche (14) der rotierenden Brechwalze (11) und
- wobei die aus dem Festverbund der Flächenkörper (10) ausgelösten Bruchstücke in den Zwischenspalt zwischen der Brechwalze (11) und der Gegenwalze (18) eingebracht werden, sodass Faserbestandteile den Flächenkörper (10), die die Bruchstücke noch zusammenhalten, durchtrennt werden.

## Claims

1. A device (1) for comminuting flat bodies (10) made of fiber-composite material, comprising a rotatably driven crushing roller (11), with which the flat bodies (10) can be brought into contact and which is designed to break up the flat bodies (10) in contact with the outer circumferential surface (14) of the crushing roller (11), and a feed apparatus (12) comprising a feed element (21) being provided, on which a feed surface (13) is formed and which is configured to bring the flat bodies (10) to the crushing roller (11) by moving along the feed surface (13), in order to enter into interaction with the outer circumferential surface (14) of the crushing roller (11), the feed surface (13) being configured, in a first circumferential position (I), for feeding with an inclination at an angle (α) to a tangent (T) of the outer circumferential surface (14) or perpendicularly to the tangent (T), **characterized in that** a mating roller (18) is configured to be arranged adjacently to and/or in parallel with the crushing roller (11) with formation of an intermediate gap.

2. The device (1) according to claim 1,
**characterized in that**
the crushing roller (11) comprises crushing elements (15) that protrude from its outer circumferential surface (14) and produce a rupture in the flat bodies (10) in the region of the front edge when in contact with a front edge of the fed flat bodies (10).

3. The device (1) according to claim 1 or 2,
**characterized in that**
a feed drive (16) is provided which is designed and configured to act on the crushing roller (11) to advance the flat bodies (10) against the outer circumferential surface (14) of said crushing roller.

4. The device (1) according to claim 3,
**characterized in that**
the feed drive (16) comprises at least one driven conveying roller (17), which can be brought into contact with the flat bodies (10).

5. The device (1) according to claim 4,
**characterized in that**
the conveying roller (17) is arranged at a distance above the feed surface (13) with formation of a conveying gap, such that the flat bodies (10) to be comminuted can be input into the gap and can be braced in this gap between the feed surface (13) and the conveying roller (17).

6. The device (1) according to claim 1,
**characterized in that**
the feed apparatus (12) is brought up to the outer circumferential surface (14) in the first circumferential position (I) with formation of a crushing gap between a roller-side end of the feed surface (13) and the outer circumferential surface (14) of the crushing roller (11), and **in that** the mating roller (18) is arranged with formation of the intermediate gap in a second circumferential position (II) downstream of the first circumferential position (I) in the rotational direction of the crushing roller (11).

7. The device (1) according to claim 6,
**characterized in that**
the first circumferential position (I) and the second circumferential position (II) enclose an angle (ß) of 20° to 135° relative to one another.

8. The device (1) according to any of the preceding claims,
**characterized in that**
the angle (α) between the feed surface (13) and the tangent (T) of the outer circumferential surface (14) of the crushing roller (11) is adjustable by the inclination of the feed apparatus (12) being able to be changed relative to the tangent (T).

9. The device (1) according to any of claims 4 to 8,
**characterized in that**
the conveying roller (17) of the feed drive (16) can be preloaded against the flat body (10) by means of a mechanical or hydraulic tensioning apparatus (19) in order to regulate the conveying gap.

10. The device (1) according to any of the preceding claims,
**characterized in that**
the crushing elements (15) that protrude from the outer circumferential surface (14) of the crushing roller (11) are inserted into the outer circumferential surface (14) and/or are materially bonded to the crushing roller (11) and/or are screwed into said crushing roller.

11. The device (1) according to any of the preceding claims,
**characterized in that**
the crushing elements (15) comprise a head-side operating portion in the form of a spherical cap (20), a cone, or a spherical portion.

12. The device (1) according to any of the preceding claims, **characterized in that** the circumferential speed of the driven conveying roller (17) is less than the circumferential speed of the crushing roller (11).

13. A method for comminuting flat bodies (10) made of fiber-composite material using a device (1) according to any of claims 1 to 12, wherein the method comprises at least the following features:
- inputting the flat bodies (10) into the device (1) by the flat bodies (10) being moved toward the crushing roller (11) so as to lie on the feed surface (13) of the feed apparatus (12), the feed surface (13) being configured with an inclination at an angle (α) to a tangent (T) of the outer circumferential surface (14) or perpendicularly to the tangent (T),
- breaking off fragments from a front edge of the flat body (10) by the front edge contacting the outer circumferential surface (14) of the rotating crushing roller (11) and
- wherein the fragments detached from the solid composite of the flat bodies (10) are introduced into the intermediate gap between the crushing roller (11) and the mating roller (18) such that fiber constituents of the flat bodies (10) that still hold the fragments together are severed.

## Revendications

1. Dispositif (1) pour concasser des corps plats (10) en matériau composite renforcé de fibres, comprenant un cylindre broyeur (11) entraîné en rotation, avec lequel les corps plats (10) peuvent être mis en contact et qui est conçu pour briser les corps plats (10) en contact avec la surface périphérique extérieure (14) du cylindre broyeur (11), et dans lequel un dispositif d'alimentation (12) avec un élément d'alimentation (21) est prévu, sur lequel est formée une surface d'alimentation (13) et qui est conçu pour déplacer les corps plats (10) vers le cylindre broyeur (11) le long de la surface d'alimentation (13) afin d'interagir avec la surface périphérique extérieure (14) du cylindre broyeur (11), dans lequel la surface d'alimentation (13) est inclinée dans une première position circonférentielle (I) de l'alimentation selon un angle (α) par rapport à une tangente (T) de la surface périphérique extérieure (14) ou est agencée perpendiculairement à la tangente (T),
**caractérisé en ce que**
un contre-cylindre (18) est conçu pour être agencé de manière adjacente et/ou parallèle au cylindre broyeur (11) en formant un interstice.

2. Dispositif (1) selon la revendication 1, **caractérisé en ce que** le cylindre broyeur (11) comprend, sur sa surface périphérique extérieure (14), des éléments de broyage (15) en saillie qui, au contact d'un bord avant des corps plats (10) alimentés, provoquent une rupture des corps plats (10) dans la zone du bord avant.

3. Dispositif (1) selon la revendication 1 ou 2, **caractérisé en ce qu'**un entraînement d'alimentation (16) est prévu, lequel est conçu et agencé pour faire avancer les corps plats (10) contre la surface périphérique extérieure (14) du cylindre broyeur (11) en agissant sur celle-ci.

4. Dispositif (1) selon la revendication 3, **caractérisé en ce que** l'entraînement d'alimentation (16) comprend au moins un cylindre de transport (17) entraîné qui peut être mis en contact avec les corps plats (10).

5. Dispositif (1) selon la revendication 4, **caractérisé en ce que** le cylindre de transport (17) est agencé à distance au-dessus de la surface d'alimentation (13) en formant un interstice de transport, de sorte que les corps plats (10) à concasser peuvent être introduits dans l'interstice et serrés dans celui-ci entre la surface d'alimentation (13) et le cylindre de transport (17).

6. Dispositif (1) selon la revendication 1, **caractérisé en ce que** le dispositif d'alimentation (12) est amené contre la surface périphérique extérieure (14) à la première position circonférentielle (I) en formant un interstice de broyage entre une extrémité côté cylindre de la surface d'alimentation (13) et la surface périphérique extérieure (14) du cylindre broyeur (11), et **en ce que** le contre-cylindre (18) est agencé en formant l'interstice à une seconde position circonférentielle (II) en aval de la première position circonférentielle (I) dans le sens de rotation du cylindre broyeur (11).

7. Dispositif (1) selon la revendication 6, **caractérisé en ce que** la première position circonférentielle (I) et la seconde position circonférentielle (II) forment un angle (β) de 20° à 135° l'une par rapport à l'autre.

8. Dispositif (1) selon l'une des revendications précédentes, **caractérisé en ce que** l'angle (α) entre la surface d'alimentation (13) et la tangente (T) de la surface périphérique extérieure (14) du cylindre broyeur (11) est réglable, l'inclinaison du dispositif d'alimentation (12) par rapport à la tangente (T) pouvant être modifiée.

9. Dispositif (1) selon l'une des revendications 4 à 8, **caractérisé en ce que** le cylindre de transport (17) de l'entraînement d'alimentation (16) peut être précontraint contre le corps plat (10) au moyen d'un dispositif (19) de serrage mécanique ou hydraulique pour régler l'interstice de transport.

10. Dispositif (1) selon l'une des revendications précédentes, **caractérisé en ce que** les éléments de broyage (15) en saillie de la surface périphérique extérieure (14) du cylindre broyeur (11) sont insérés dans la surface périphérique extérieure (14) et/ou reliés au cylindre broyeur (11) par liaison de matière et/ou vissés dans celui-ci.

11. Dispositif (1) selon l'une des revendications précédentes, **caractérisé en ce que** les éléments de broyage (15) comprennent une section efficace côté tête sous la forme d'une calotte sphérique (20), d'un cône ou d'une section conique.

12. Dispositif (1) selon l'une des revendications précédentes, **caractérisé en ce que** la vitesse périphérique du cylindre de transport (17) entraîné est inférieure à la vitesse périphérique du cylindre broyeur (11).

13. Procédé de concassage de corps plats (10) en matériau composite renforcé de fibres avec un dispositif (1) selon l'une des revendications 1 à 12, le procédé comprenant au moins les caractéristiques suivantes :
- introduction des corps plats (10) dans le dispositif (1), en déplaçant les corps plats (10) contre la surface d'alimentation (13) du dispositif d'alimentation (12) en direction du cylindre broyeur (11), la surface d'alimentation (13) étant inclinée d'un angle (α) par rapport à une tangente (T) de la surface périphérique extérieure (14) ou étant agencée perpendiculairement à la tangente (T),
- extraction de fragments d'un bord avant du corps plat (10) par contact du bord avant avec la surface périphérique extérieure (14) du cylindre broyeur (11) rotatif et
- dans lequel les fragments détachés de la liaison solide des corps plats (10) sont introduits dans l'interstice entre le cylindre broyeur (11) et le contre-cylindre (18), de sorte que les composants fibreux qui maintiennent encore les fragments ensemble, sont séparés du corps plat (10).
